# EUROPEAN PATENT SPECIFICATION

(11) **EP 4 575 284 B1**
(45) Date of publication and mention of the grant of the patent: **05.08.2026**
(21) Application number: 23217989.5
(22) Date of filing: 19.12.2023
(51) Int. Cl.: F16K 31/05, F16K 37/00

(54) **MECHANICAL POSITION INDICATOR, ARRANGEMENT, AND ACTUATOR OF AUTOMATION TECHNOLOGY**
MECHANISCHER POSITIONSANZEIGER, ANORDNUNG UND AKTUATOR DER AUTOMATISIERUNGSTECHNIK
INDICATEUR DE POSITION MÉCANIQUE, AGENCEMENT ET ACTIONNEUR DE TECHNOLOGIE D'AUTOMATISATION

(43) Date of publication of application: 25.06.2025
(73) Proprietor: AUMA Riester GmbH & Co. KG, 79379 Müllheim (DE)
(72) Inventor: Tritschler, Matthias, 79258 Hartheim (DE); Ingenhoven, Benjamin, 79379 Müllheim (DE)
(74) Representative: Mertzlufft-Paufler, Cornelius

(56) References cited:
- CN-A- 115 789 318
- CN-U- 211 779 333
- CN-U- 213 025 865
- DE-A1- 10 245 766
- JP-A- 2002 031 259
- RU-C1- 2 108 513
- RU-C1- 2 770 080

## Description

The invention is concerned with a mechanical position indicator of an actuator of automation technology, an arrangement of a mechanical position indicator and a gear set and such an actuator.

Actuators of automation technology are used to operate mechanical devices such as valves in process industry tubing for example. By opening or closing valves in such tubing the flow of a process medium is permitted or inhibited. In this way for example a chemical reaction or a filling process can be controlled.

For operators of such a process industry plant often it is important to be able to check an actuation state of a mechanical device. Actuators according to the state of the art as shown for example in US9618136B2 often come with a mechanical position indicator. However, different types of mechanical devices need different types of actuators with different drives and gear sets. Mechanical position indicators have to be adapted to each type of actuator.

The patent document JP 2002 031259 A describes an electric actuator to be mounted on a rotary valve such as a ball valve and a butterfly valve, and more particularly an electric actuator using a planetary gear mechanism.

The utility model CN 211 779 333 U relates to the field of pneumatic valves, in particular to a pneumatic actuator with indicating function and a pneumatic valve using the mechanism.

The patent document RU 2 108 513 C1 describes an invention, which relates to automatic control of technological processes and can be used as a drive for shut-off and control valves for moving the regulating bodies in accordance with command signals of automatic control and control devices and operational manual control.

The patent document RU 2 770 080 C1 describes an invention, which relates to electric drives, namely to combined shut-off valve controls, and can be used on pipelines for transporting oil, petroleum products and gases, in the chemical and petrochemical industries.

Document CN 213025865 U discloses a position detection device based on a planetary gear mechanism, which comprises a position switch. A moving stroke position of a moving part needing to be detected is converted into circumferential rotation of a rotating plate by one circle through the planetary gear mechanism, and the corresponding position switch is triggered.

Document CN 115789318 A discloses a planetary transmission electric actuating mechanism, which can have an electric encoder.

The object of the invention is to provide a mechanical position indicator, which is adaptable to different types of actuators in a robust a simple manner and an actuator with such a mechanical position indicator.

The problem is solved by a mechanical position indicator according to claim 1, an arrangement according to claim 13 and an actuator according to claim 14.

An inventive mechanical position indicator for representing an actuation state of an actuator of automation technology connectable to an actuator gear set or an output of said actuator, comprises:
an indicating element for representing said actuation state;
an indicator gear set for driving said indicating element, wherein said indicator gear set comprises an input and an output;
a motion transmitter for transmitting a motion of said indicator gear set to said indicating element being mechanically connected to the indicating element and releasably connected to the indicator gear set
wherein
the indicator gear set comprises at least one planetary gear stage, wherein a transmission ratio to drive said indicating element is alterable by exchanging at least one of said at least one planetary gear stage or by exchanging said gear set.

In this way said mechanical position indicator may be easily adapted to different applications and/or actuators.

Advantageously said at least one planetary gear stage each is modular such that it may be easily connected to or disconnected from another planetary gear stage or said motion transmitter.

In an embodiment said mechanical position indicator comprises at least two planetary gear stages being connected by a coupling. In that way, by exchanging at least one of said gear stages said transmission ration may be adapted to a different application and/or actuator.

In an embodiment he motion transmitter further comprising a spindle and a spindle nut, wherein said indicator element and said spindle nut are connected to each other fixedly, wherein said indicator gear set is arranged for rotating said spindle and wherein said indicator element is mounted rotationally fixed.

In an embodiment said actuation state is represented by a linear position of said indicating element along a mounting orientation, wherein said linear position of said indicating element has a first limit and a second limit,
wherein said first limit is fix,
wherein the mechanical position indicator comprises a slidable mask at least partially surrounding said indicating element in a cross section, wherein the mask is set up to indicate a position of said second limit.

Said mask helps to compensate residual variabilities of said variable, dependent on application and/or actuator, second limit such that the second limit can be visually well defined.

In an embodiment in a mounting orientation of said mechanical position indicator the second limit is the lower limit.

In an embodiment said mask keeps its position due to friction or a fixation mechanism such as a screw mechanism or a latch mechanism or such alike.

In an embodiment a spatial separation of both limits is at least 10 centimeters, and preferably at least 20 centimeters and especially at least 30 centimeters,
and/or
wherein said spatial separation is at most 200 centimeters, and preferably at most 150 centimeters and especially at most 100 centimeters.

In this way a well visibility of said mechanical position indicator is supported.

In an embodiment a diameter of said indicating element in a cross section is at least 2 centimeters and preferably at least 5 centimeters and especially at least 10 centimeters and/or
wherein said diameter is at most 70 centimeters, and preferably at most 50 centimeters and especially at most 30 centimeters.

In this way a well visibility of said mechanical position indicator is supported.

In an embodiment a ratio of a separation on an upper limit of said linear position and a lower limit of said linear position and a diameter of said indicating element is
at least 2 and preferably at least 3 and especially at least 5
   and/or
at most 20 and preferably at most 15 and especially at most 10.

In an embodiment said indicating element is housed within an optically transparent housing.

In this way a protection of said motion transmitter and said planetary gear set from harm and dirt is achieved.

In an embodiment said mask is arranged outside said housing. In this way the visual definition of said second limit may easily and robustly performed.

In an embodiment said indicating element has a first color,
and wherein a fix background element has a second color, wherein said first color and said second color on a color wheel respectively color circle have an angular distance of at least 60 degrees.

Said color circle may be a color circle based on RGB or CMY or HSV or HSL color standard. In this way it is ensured, that the colors of the indication element and the background element are well different with respect to human perception. For example, the color combination green and red is useful, however red and orange is not.

An inventive arrangement of automation technology comprises:
a gear set comprising a hollow output shaft;
a mechanical position indicator according to one of former claims for representing an actuation state of said gear set being mechanically connected with said gear set,
wherein said hollow connection shaft is positioned inside said output shaft or gear shaft, wherein said at least one friction device fixes the position of the connecting shaft relatively to said output shaft or gear shaft.

An inventive actuator of automation technology comprises:
an output with an output shaft for actuating an mechanical device such as a valve;
an actuator gear set;
a drive, wherein the drive is set up for driving said output, and wherein the actuator gear set is set up for transmitting a force or a torque from the drive towards the output shaft;
an actuator housing arrangement, wherein said output shaft, said drive and said gear set are arranged inside said actuator housing arrangement,
characterized in that
the actuator comprises a mechanical position indicator according to one of former claims, wherein said actuator gear set is set up for driving said indicator gear set.

In the following the invention is explained with the help of figures.
Fig. 1 shows an angled view of an exemplary inventive actuator;
Fig. 2 shows a front view of the actuator as shown in Fig. 1;
Fig. 3 shows a longitudinal section of the exemplary inventive mechanical position indicator as shown in Fig. 1;
Fig. 4 a) shows a longitudinal section of an exemplary inventive indicator gear set and Fig. 4 b) an angular view on a part of said indicator gear set;
Fig. 5 a) shows a longitudinal section of an exemplary inventive ball coupling and Fig. 5 b) shows an angular view on a part of said indicator gear set, and Fig. 5 c) shows embodiments of parts of said ball coupling;
Fig. 6 shows an exemplary assembly scheme of an exemplary inventive actuator.

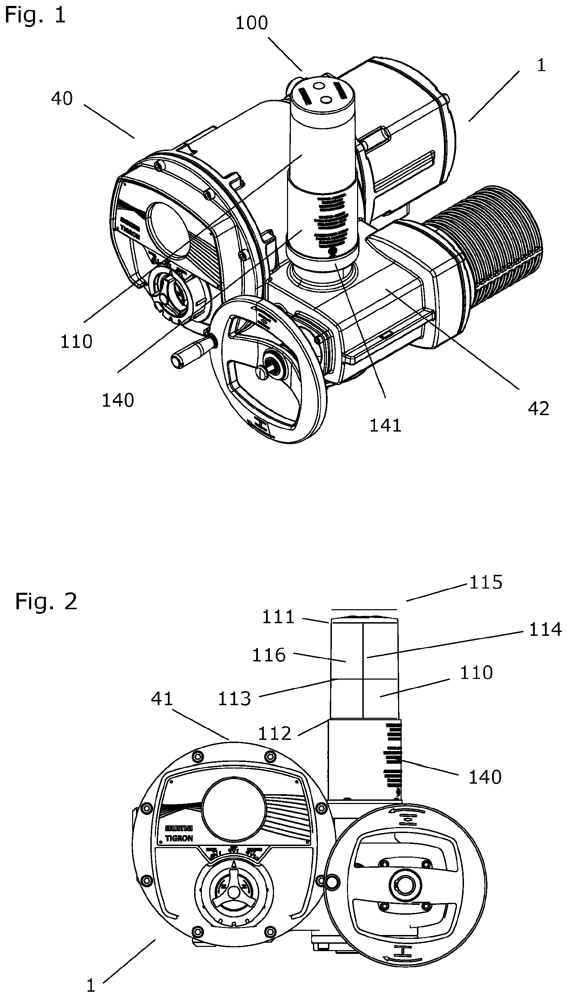

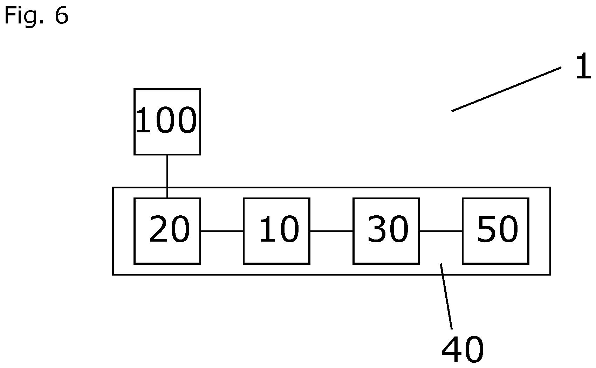

Fig. 1 shows an angled view of an exemplary inventive actuator 1, and Fig. 2 shows a front view of said actuator, said actuator 1 comprising a housing arrangement 40, in which a drive 30, an electronic circuit 50, an actuator gear set 10 and an output 20 are allocated, see also Fig. 6. The drive 30 is arranged for delivering a force or a torque onto a mechanical device such as a valve, and may be an electric, pneumatic, or hydraulic drive. Said electronic circuit is arranged for controlling said drive. Said actuator gear set transmits the drive force respectively drive torque onto said output, to which output said mechanic device is couplable.

To give an operator information about an actuation state of said mechanical device, said actuator comprises a mechanical position indicator 100, which translates the actuation of said mechanical device into a linear position 113 of an indicating element 110. The linear position 113 of said indicating element 110 is between a first limit 111 and a second limit 112 along a longitudinal axis 117 of said mechanical position indicator, wherein for example in a mounted state with respect to a mounting orientation the first limit is a limit averted from said actuator, and the second limit is a limit facing said actuator. Dependent on the actuator and on the application respectively mechanical device to control, one of said first limit and said second limit varies. The mounting orientation may be a vertical as shown here or horizontal or a diagonal for example.

The actuator housing arrangement has a maximal extension 41.

In an embodiment as shown said first limit and said second limit of said linear position of said indicating element protrude said maximal extension, wherein a spatial separation of said first limit and said second limit is at least 1/2 of a cube root of said actuator housing volume 42,
and/or
wherein said spatial separation is at least 15 centimeters, and preferably at least 20 centimeters and especially at least 25 centimeters,
   and/or
wherein said spatial separation is at most 300 centimeters, and preferably at most 250 centimeters and especially at most 200 centimeters,
   and/or
wherein said spatial separation is at least a half of a largest diameter of an convex envelope of said housing arrangement.

In this way the mechanical position indicator is well visible from a notable distance, such that an actuation position respectively actuation state can be shown also to more distant observers. Therefor for example maintaining control over an industrial plant is aided.

In an embodiment a diameter 115 of said indicating element 110 in a cross section is at least 2 centimeters and preferably at least 5 centimeters and especially at least 6 centimeters
and/or
wherein said diameter is at most 70 centimeters, and preferably at most 50 centimeters and especially at most 30 centimeters.

A least diameter of said mechanical position indicator further aids maintaining control over said industrial plant. A maximum diameter of said mechanical position indicator ensures a manageability of said mechanical position indicator.

In an embodiment a ratio of a separation of said first limit 111 and said second limit 112 and said diameter 115 of said indicating element 110 is
at least 2 and preferably at least 3 and especially at least 5
   and/or
at most 20 and preferably at most 15 and especially at most 10.

In an embodiment said indicating element 110 is housed within an optically transparent housing part 151 of a housing 150 as shown in Figs. 1 to 3.

In an embodiment said indicating element 110 has a first color, and wherein a background element 116 being partially covered by said indicating element dependent on said actuation state has a second color, wherein said first color and said second color on a gradient color wheel respectively gradient color circle have an angular distance of at least 50 degrees and especially at least 60 degrees. Said color circle may be a color circle based on RGB or CMY or HSV or HSL color standard. In this way it is ensured, that the colors of the indication element and the background element are well different with respect to human perception. For example, the color combination green and red is useful, however red and orange is not.

In an embodiment said indicating element 110 in a horizontal cross section offers the possibility to check said actuation state within an angular range of at least 180 and preferably at least 270 degrees and especially 360 degrees as shown in Figs. 1, 2 and 3.

As shown exemplified this can be achieved with said indicating element following a cylindrical form, wherein said background element is encompassed by said indicating element. The indicating element covers said background element dependent on the actuation state of a mechanical device.

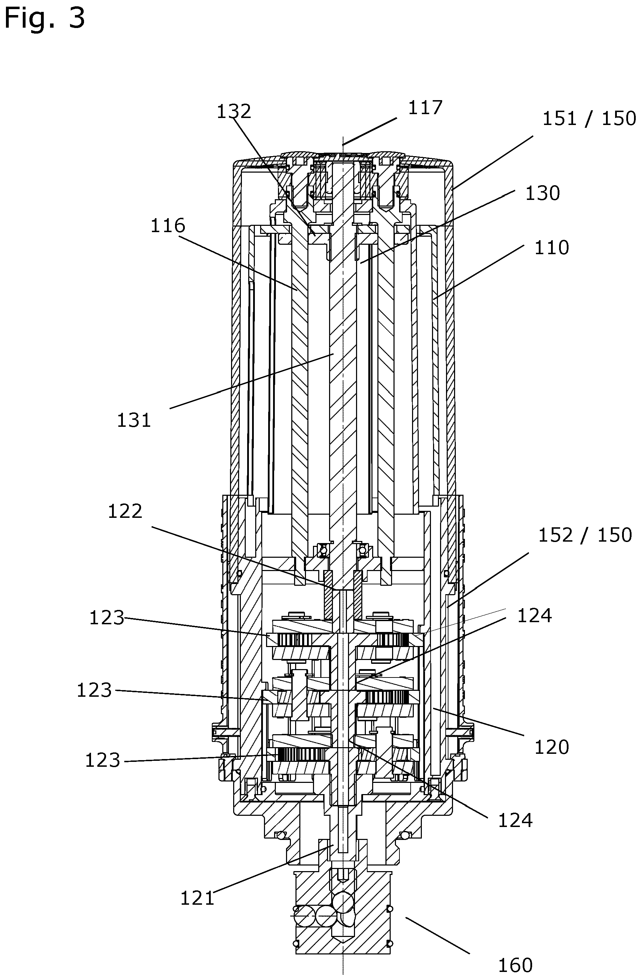

In an embodiment as shown, the mechanical position indicator comprises a mask 140 for demonstrating a position of said second limit 112. The mask 140 is slidable along an axis of said mechanical position indicator and in an embodiment as shown fixable with a mask fixation mechanism 141 such as a screw mechanism or a latch mechanism or such alike. Alternatively, the mask may keep its position due to friction. Said second limit is dependent on the mechanical device the actuator is going to be attached to, and dependent on a chosen actuator gear set 10 as shown in Fig. 6 and dependent on a chosen indicator gear set 120 as shown in Fig. 3. With said slidable mask, the mechanical position indicator can be adapted to a certain application so that the varying limit of said linear position 113 is visually well defined.

Fig. 3 shows a longitudinal section of the mechanical position indicator 100 as shown in Fig. 1 and 2 comprising an indicator gear set 120, said mask 140, and a fixation mechanism 160 for fixing said mechanical position indicator with said actuator 1. The indicator gear set comprises an input 121 for receiving a force or a torque and an output for driving the indicating element 110. A motion transmitter 130 is arranged for receiving a motion from said output and transmitting said motion of said indicator gear set to said indicating element being mechanically connected to the indicating element and connected to the indicator gear set via the output 122. The motion transmitter comprises a spindle 131 and a spindle nut 132,
wherein said indicating element 110 and said spindle nut are connected to each other fixedly, wherein said indicator gear set 120 is arranged for rotating said spindle and wherein said indicating element is mounted rotationally fixed. In an embodiment as shown said mechanical position indicator 110 comprises an optically transparent housing part 151 of a housing 150 for protecting said motion transmitter and said planetary gear set from harm and dirt. As shown the planetary gear set is arranged within a gear set housing part 152.

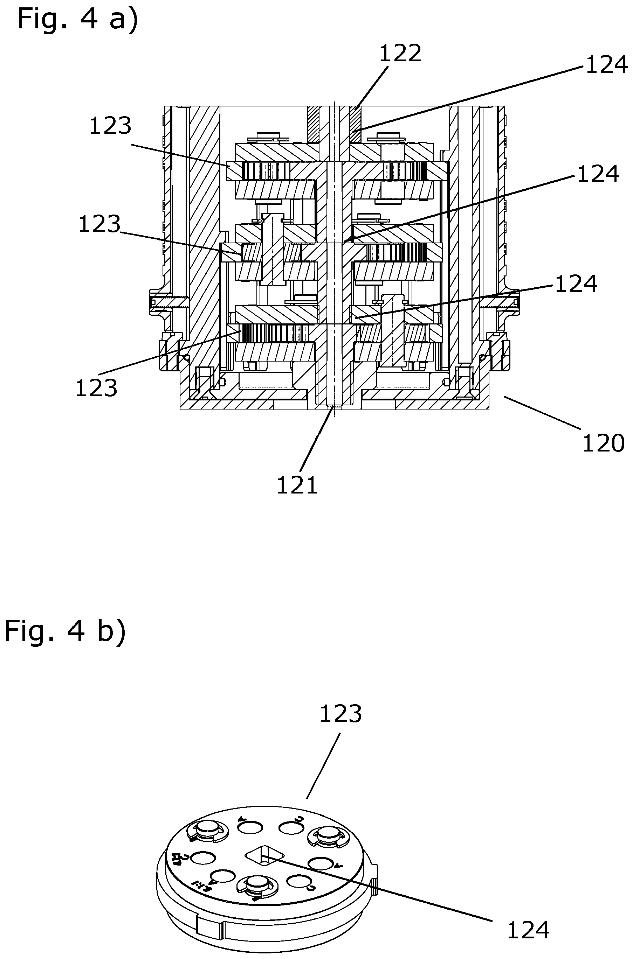

Fig. 4 a) shows a longitudinal section of an exemplary inventive embodiment of said indicator gear set 120, and Fig. 4 b) shows an angular view on a modular planetary gear stage 123. In the inventive embodiment as shown, said indicator gear set comprises a set of three planetary gear stages each being connected with a coupling 124. The number of planetary gear stages may vary between 1 and 5. Especially the number of said planetary gear stages is at least 2. With the help of said at least one planetary gear stage a transmission ratio between said actuator gear set respectively actuator output and said motion transmitter respectively said indicating element 110 may be adjusted by exchanging one or more planetary gear stages of by exchanging the entire indicator gear set being connected with the motion transmitter 130 with a coupling 124. In this way, the mechanical position indicator may be adapted to a wide range of applications as well as actuators in such a way, that one of said first limit 111 and said second limit 112, here the second limit 112 or lower limit may be kept in a certain axial interval of said longitudinal axis 117. A modular embodiment of said planetary gear stages as shown in Fig. 4 b) increases an adaptability of said mechanical position indicator.

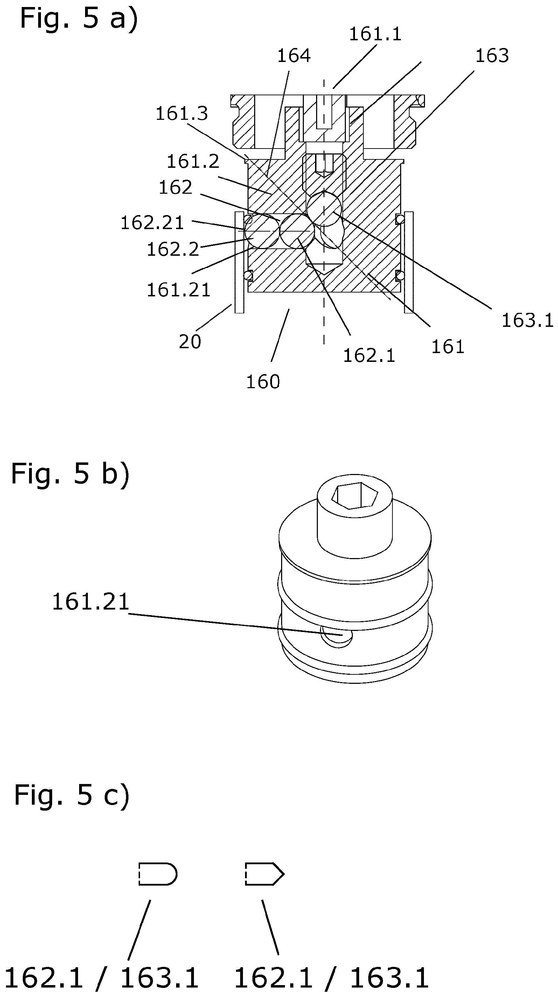

Figs. 5 a) to 5 c) illustrate exemplary embodiments of said fixation mechanism 160. Said fixation mechanism is arranged for fixing said mechanical position indicator 110 with said hollow output shaft 20 of said actuator or a hollow output shaft of said actuator gear set 10. Said fixation mechanism 160 comprises a hollow connection shaft 161 with a shaft wall 161.2 and a shaft axis 161.1, the hollow connection shaft comprising at least one pass 161.21 through said shaft wall;
at least one radially acting friction device 162 situated in a corresponding pass; one axially acting force delivery device 163 situated inside the hollow connection shaft arranged for setting a force on said friction device, which friction device in turn when in a mounted state a force is applied by that force delivery device. The pass advantageously, but not necessarily is oriented radially with respect to an output shaft axis or said shaft axis 161.1. At least a radial component of said orientation is larger than a tangential component.

In that way a friction grip between the actuator output respectively actuator gear set output and said mechanical position indicator input 121 is achieved. With additionally rotationally fixing said housing 150 of said mechanical position indicator for example at said housing arrangement, a movement of said drive 30 can be transferred to said indicating element 110. The rotational fixation can be achieved for example with a bracket mechanism or with a screwing mechanism.

As shown exemplary in this embodiment, said force delivery device 163 comprises a force delivery element 163.1, wherein each of said at least one friction device 162 comprises a force accepting element 162.1, wherein an angle between a tangent plane 164 through a contact point between said force delivery element and said force accepting element and said shaft axis is 45 degrees. Said angle may be less than 80 degrees, and exemplary less than 70 degrees and especially less than 60 degrees
and / or
more than 10 degrees, and exemplary more than 20 degrees and especially more than 30 degrees. In that way, applying a force onto said force accepting element 162.1 is translated well into a movement of said force accepting element and therefore a buildup of friction between said fixation mechanism 160 and said output 20 respectively output of said actuator gear set 10.

A friction element is arranged for creating friction between said fixation mechanism 160 and said hollow actuator output 20 respectively hollow actuator gear shaft via a friction part 162.21 of said friction element, said friction part protruding from a corresponding one of said pass.

As shown exemplary in the embodiment of Fig. 5a), said force delivery element 163.1, said force accepting element 162.1 and said friction element 162.2 are spherical. In this way a very simple and effective force guiding mechanism can be arranged. Alternatively, the force accepting element 162.1 and the friction element 162.2 may be one single element. Alternatively, instead of being spherical, said elements may be also ellipsoidal. Alternatively, said elements at least partially follow a cone (see Fig. 5 c)), or an ellipsoid, or a sphere (see Fig. 5 c)) or a polyhedron such as a tetrahedron or a pentahedron, especially a regular polyhedron, or a wedge. The mechanism works if between said force delivery element and said force accepting element a contact point or contact line or contact area with said tangential plane inclined to said shaft axis 161.1 is arranged.

Fig. 6 depicts a schematic of a functional relationship of different parts of an exemplary inventive actuator 1. The actuator comprises a drive 30, an electronic circuit 50 to control said drive, an actuator gear set 10 and an output 20 to actuate a mechanical device such as a valve. The drive is arranged to charge said output with a force or a torque. Said actuator gear set is arranged to transmit said force respectively said torque from said drive to said output. The inventive mechanical position indicator may be connected to said output 20 as shown here or to the actuator gear set 10.

Features of embodiments are exchangeable and/or combinable if there are no technical or logical contradictions or otherwise stated.

The mechanical position indicator as shown may also be applied to purely mechanical actuators actuated for example with a hand wheel.

### Reference number list

- 1: Actuator
- 10: Actuator gear set
- 20: Output
- 30: Drive
- 40: Actuator housing arrangement
- 41: Maximal extension
- 42: Actuator housing volume
- 50: Electronic circuit
- 100: Mechanical position indicator
- 110: Indicating element
- 111: First limit
- 112: Second limit
- 113: Linear Position
- 114: Spatial separation
- 115: Diameter
- 116: Background element
- 120: Indicator gear set
- 121: Input
- 122: Output
- 123: Planetary gear stage
- 124: Coupling
- 130: Motion transmitter
- 131: Spindle
- 132: Spindle nut
- 140: Mask
- 141: Mask fixation mechanism
- 150: Housing
- 151: Transparent housing part
- 152: Gear set housing part
- 160: Fixation mechanism
- 161: Hollow connection shaft
- 161.1: Shaft axis
- 161.2: Shaft wall
- 161.21: Shaft pass
- 161.3: Shaft stop
- 162: Friction device
- 162.1: Force accepting element
- 162.2: Friction element
- 162.21: Friction part
- 163: Force delivery device
- 163.1: Force delivery element
- 164: Tangent plane

## Claims

1. Mechanical position indicator (100) for representing an actuation state of an actuator of automation technology connectable to an actuator gear set (10) or an output (20) of said actuator, comprising:
an indicating element (10) for representing said actuation state;
an indicator gear set (120) for driving said indicating element, wherein said indicator gear set comprises an input (121) for receiving a force or a torque and an output (122);
a motion transmitter (130) for receiving a motion from said output and transmitting said motion of said indicator gear set to said indicating element being mechanically connected to the indicating element and connected to the indicator gear set via the output (122)
**characterized in that**
the indicator gear set comprises at least one planetary gear stage (123), especially at least one modular planetary gear stage, wherein a transmission ratio to drive said indicating element is alterable by exchanging at least one of said at least one planetary gear stage or by exchanging said indicator gear set.

2. Mechanical position indicator according to claim 1,
further comprising at least two planetary gear stages (123) being connected by a coupling (124).

3. Mechanical position indicator according to claim 1 or 2,
the motion transmitter (130) further comprising a spindle (131) and a spindle nut (132),
wherein said indicating element (110) and said spindle nut are connected to each other fixedly, wherein said indicator gear set (120) is arranged for rotating said spindle and wherein said indicating element is mounted rotationally fixed.

4. Mechanical position indicator according to one of the former claims,
wherein said actuation state is represented by a linear position (113) of said indicating element (110) wherein said linear position of said indicating element has a first limit (111) and an opposite second limit (112),
wherein said first limit is fix,
wherein the mechanical position indicator comprises a slidable mask (140) at least partially surrounding said indicating element in a cross section, wherein the mask is set up to indicate a position of said second limit.

5. Mechanical position indicator according to claim 4,
wherein in a mounted state the second limit (112) with respect to a mounting orientation is the limit facing said actuator.

6. Mechanical position indicator according to claim 4 or 5,
wherein said mask (140) keeps its position due to friction or a fixation mechanism (141) such as a screw mechanism or a latch mechanism or such alike.

7. Mechanical position indicator according to one of former claims 4 to 6,
wherein a spatial separation (114) of the first limit and the second limit is at least 10 centimeters, and preferably at least 20 centimeters and especially at least 30 centimeters,
and/or
wherein said spatial separation is at most 200 centimeters, and preferably at most 150 centimeters and especially at most 100 centimeters.

8. Mechanical position indicator according to one of former claims,
wherein a diameter (115) of said indicating element (110) in a cross section is at least 2 centimeters and preferably at least 5 centimeters and especially at least 10 centimeters
and/or
wherein said diameter is at most 70 centimeters, and preferably at most 50 centimeters and especially at most 30 centimeters.

9. Mechanical position indicator according to one of the former claims 4 to 8, wherein a ratio of a separation of said first limit (111) and said second limit (112) and said diameter (115) of said indicating element (110) is
at least 2 and preferably at least 3 and especially at least 5
and/or
at most 20 and preferably at most 15 and especially at most 10.

10. Mechanical position indicator according to one of former claims,
wherein said indicating element (110) is housed within an optically transparent housing part (151) of a housing (150) of said mechanical position indicator.

11. Mechanical position indicator according to claim 4 or 6 or 10,
wherein said mask (140) is arranged outside said housing (150).

12. Mechanical position indicator according to one of former claims,
wherein said indicating element (110) has a first color,
and wherein a background element (116) has a second color, wherein said first color and said second color on a color wheel respectively color circle have an angular distance of at least 60 degrees.

13. Arrangement of automation technology comprising:
a gear set comprising a hollow output shaft;
a mechanical position indicator (100) according to one of former claims for representing an actuation state of said gear set being mechanically connected with said gear set,
wherein a hollow connection shaft (161) is positioned inside said output shaft or a gear shaft, wherein said at least one friction device (162) fixes the position of the connecting shaft relatively to said output shaft or gear shaft.

14. Actuator (1) of automation technology comprising:
an output (20) with an output shaft for actuating an mechanical device such as a valve;
an actuator gear set (10);
a drive (30), wherein the drive is set up for driving said output, and wherein the actuator gear set is set up for transmitting a force or a torque from the drive towards the output shaft;
an actuator housing arrangement (40), wherein said output shaft, said drive and said actuator gear set are arranged inside said actuator housing arrangement, **characterized in that**
the actuator comprises a mechanical position indicator (100) according to one of claims 1 to 12, wherein said actuator gear set or said output is set up for driving said indicator gear set,
wherein said indicator gear set is connected to said actuator gear set or the output via the input (121) of said indicator gear set.

15. Actuator according to claim 14,
wherein said drive is an electric, hydraulic, or pneumatic drive,
wherein the actuator comprises an electronic circuit (50) for actuating said drive.

## Patentansprüche

1. Mechanischer Positionsanzeiger (100) zum Darstellen eines Betätigungszustands eines Aktuators der Automatisierungstechnik, der mit einem Aktuatorzahnradsatz (10) oder einem Ausgang (20) des Aktuators verbindbar ist, umfassend:
ein Anzeigeelement (10) zum Darstellen des Betätigungszustands;
einen Anzeigerzahnradsatz (120) zum Antreiben des Anzeigeelements, wobei der Anzeigerzahnradsatz einen Eingang (121) zum Aufnehmen einer Kraft oder eines Drehmoments und einen Ausgang (122) umfasst;
einen Bewegungsübertrager (130) zum Aufnehmen einer Bewegung von dem Ausgang und Übertragen der Bewegung des Anzeigerzahnradsatzes an das Anzeigeelement, der mechanisch mit dem Anzeigeelement verbunden ist und über den Ausgang (122) mit dem Anzeigerzahnradsatz verbunden ist
**dadurch gekennzeichnet, dass**
der Anzeigerzahnradsatz mindestens eine Planetenradstufe (123), insbesondere mindestens eine modulare Planetenradstufe, umfasst, wobei ein Übersetzungsverhältnis, um das Anzeigeelement anzutreiben, durch Auswechseln mindestens einer der mindestens einen Planetenradstufe oder durch Auswechseln des Anzeigerzahnradsatzes änderbar ist.

2. Mechanischer Positionsanzeiger nach Anspruch 1,
ferner umfassend mindestens zwei Planetenradstufen (123), die durch eine Kupplung (124) verbunden sind.

3. Mechanischer Positionsanzeiger nach Anspruch 1 oder 2,
wobei der Bewegungsübertrager (130) ferner eine Spindel (131) und eine Spindelmutter (132) umfasst,
wobei das Anzeigeelement (110) und die Spindelmutter fest miteinander verbunden sind, wobei der Anzeigerzahnradsatz (120) zum Rotieren der Spindel angeordnet ist und wobei das Anzeigeelement rotationsfest montiert ist.

4. Mechanischer Positionsanzeiger nach einem der vorherigen Ansprüche,
wobei der Betätigungszustand durch eine lineare Position (113) des Anzeigeelements (110) dargestellt ist, wobei die lineare Position des Anzeigeelements eine erste Begrenzung (111) und eine gegenüberliegende zweite Begrenzung (112) aufweist,
wobei die erste Begrenzung fest ist,
wobei der mechanische Positionsanzeiger eine verschiebbare Maske (140), die das Anzeigeelement in einem Querschnitt mindestens teilweise umgibt, umfasst, wobei die Maske dazu eingerichtet ist, eine Position der zweiten Begrenzung anzuzeigen.

5. Mechanischer Positionsanzeiger nach Anspruch 4,
wobei in einem montierten Zustand die zweite Begrenzung (112) in Bezug auf eine Montageausrichtung die Begrenzung ist, die dem Aktuator zugewandt ist.

6. Mechanischer Positionsanzeiger nach Anspruch 4 oder 5,
wobei die Maske (140) ihre Position durch Reibung oder einen Befestigungsmechanismus (141), wie etwa einen Schraubmechanismus oder einen Verriegelungsmechanismus oder dergleichen, beibehält.

7. Mechanischer Positionsanzeiger nach einem der vorherigen Ansprüche 4 bis 6,
wobei eine räumliche Trennung (114) der ersten Begrenzung und der zweiten Begrenzung mindestens 10 Zentimeter und bevorzugt mindestens 20 Zentimeter und insbesondere mindestens 30 Zentimeter beträgt,
und/oder
wobei die räumliche Trennung höchstens 200 Zentimeter und bevorzugt höchstens 150 Zentimeter und insbesondere höchstens 100 Zentimeter beträgt.

8. Mechanischer Positionsanzeiger nach einem der vorherigen Ansprüche,
wobei ein Durchmesser (115) des Anzeigeelements (110) in einem Querschnitt mindestens 2 Zentimeter und bevorzugt mindestens 5 Zentimeter und insbesondere mindestens 10 Zentimeter beträgt
und/oder
wobei der Durchmesser höchstens 70 Zentimeter und bevorzugt höchstens 50 Zentimeter und insbesondere höchstens 30 Zentimeter beträgt.

9. Mechanischer Positionsanzeiger nach einem der vorherigen Ansprüche 4 bis 8,
wobei ein Trennungsverhältnis der ersten Begrenzung (111) und der zweiten Begrenzung (112) und des Durchmessers (115) des Anzeigeelements (110) mindestens 2 und bevorzugt mindestens 3 und insbesondere mindestens 5 beträgt
und/oder
höchstens 20 und bevorzugt höchstens 15 und insbesondere höchstens 10 beträgt.

10. Mechanischer Positionsanzeiger nach einem der vorherigen Ansprüche,
wobei das Anzeigeelement (110) innerhalb eines optisch transparenten Gehäuseteils (151) eines Gehäuses (150) des mechanischen Positionsanzeigers untergebracht ist.

11. Mechanischer Positionsanzeiger nach Anspruch 4 oder 6 oder 10,
wobei die Maske (140) außerhalb des Gehäuses (150) angeordnet ist.

12. Mechanischer Positionsanzeiger nach einem der vorherigen Ansprüche,
wobei das Anzeigeelement (110) eine erste Farbe aufweist,
und wobei ein Hintergrundelement (116) eine zweite Farbe aufweist, wobei die erste Farbe und die zweite Farbe auf einem Farbrad bzw. Farbkreis einen Winkelabstand von mindestens 60 Grad aufweisen.

13. Anordnung der Automatisierungstechnik, umfassend:
einen Zahnradsatz, der eine hohle Ausgangswelle umfasst;
einen mechanischen Positionsanzeiger (100) nach einem der vorherigen Ansprüche zum Darstellen eines Betätigungszustands des Zahnradsatzes, der mechanisch mit dem Zahnradsatz verbunden ist,
wobei eine hohle Verbindungswelle (161) innerhalb der Ausgangwelle oder einer Radwelle positioniert ist, wobei die mindestens eine Reibungsvorrichtung (162) die Position der Verbindungswelle relativ zu der Ausgangswelle oder der Radwelle fixiert.

14. Aktuator (1) der Automatisierungstechnik, umfassend:
einen Ausgang (20) mit einer Ausgangwelle zum Betätigen einer mechanischen Vorrichtung, wie etwa eines Ventils;
einen Aktuatorzahnradsatz (10);
einen Antrieb (30), wobei der Antrieb zum Antreiben des Ausgangs eingerichtet ist und wobei der Aktuatorzahnradsatz zum Übertragen einer Kraft oder eines Drehmoments von dem Antrieb zu der Ausgangswelle eingerichtet ist;
eine Aktuatorgehäuseanordnung (40), wobei die Ausgangswelle, der Antrieb und der Aktuatorzahnradsatz innerhalb der Aktuatorgehäuseanordnung angeordnet sind,
**dadurch gekennzeichnet, dass**
der Aktuator einen mechanischen Positionsanzeiger (100) nach einem der Ansprüche 1 bis 12 umfasst, wobei der Aktuatorzahnradsatz oder der Ausgang zum Antreiben des Anzeigerzahnradsatzes eingerichtet ist,
wobei der Anzeigerzahnradsatz über den Eingang (121) des Anzeigerzahnradsatzes mit dem Aktuatorzahnradsatz oder dem Ausgang verbunden ist.

15. Aktuator nach Anspruch 14,
wobei der Antrieb ein elektrischer, hydraulischer oder pneumatischer Antrieb ist,
wobei der Aktuator eine elektronische Schaltung (50) zum Betätigen des Antriebs umfasst.

## Revendications

1. Indicateur de position mécanique (100) pour représenter un état d'actionnement d'un actionneur de technologie d'automatisation, pouvant être raccordé à un train d'engrenages (10) d'actionneur ou à une sortie (20) dudit actionneur, comprenant :
un élément d'indication (10) pour représenter ledit état d'actionnement ;
un train d'engrenages (120) d'indicateur pour entraîner ledit élément d'indication, dans lequel ledit train d'engrenages d'indicateur comprend une entrée (121) pour recevoir une force ou un couple et une sortie (122) ;
un transmetteur de mouvement (130) pour recevoir un mouvement provenant de ladite sortie et transmettre ledit mouvement dudit train d'engrenages d'indicateur audit élément d'indication, qui est relié mécaniquement à l'élément d'indication et relié au train d'engrenages d'indicateur via la sortie (122)
**caractérisé en ce que**
le train d'engrenages d'indicateur comprend au moins un étage d'engrenages planétaires (123), notamment au moins un étage d'engrenages planétaires modulaires, dans lequel un rapport de transmission pour entraîner ledit élément d'indication est modifiable en remplaçant au moins l'un desdits au moins un étage d'engrenages planétaires ou en remplaçant ledit train d'engrenages d'indicateur.

2. Indicateur de position mécanique selon la revendication 1,
comprenant en outre au moins deux étages d'engrenages planétaires (123) qui sont reliés par un accouplement (124).

3. Indicateur de position mécanique selon la revendication 1 ou 2,
le transmetteur de mouvement (130) comprenant en outre une fusée (131) et un écrou de fusée (132),
dans lequel ledit élément d'indication (110) et ledit écrou de fusée sont reliés l'un à l'autre de manière fixe, dans lequel ledit train d'engrenages (120) d'indicateur est agencé pour faire tourner ladite fusée et dans lequel ledit élément d'indication est monté fixe en rotation.

4. Indicateur de position mécanique selon l'une des revendications précédentes,
dans lequel ledit état d'actionnement est représenté par une position linéaire (113) dudit élément d'indication (110), dans lequel ladite position linéaire dudit élément d'indication présente une première limite (111) et une deuxième limite opposée (112),
dans lequel ladite première limite est fixe,
dans lequel l'indicateur de position mécanique comprend un masque coulissable (140) entourant au moins partiellement ledit élément d'indication en coupe, dans lequel le masque est configuré pour indiquer une position de ladite deuxième limite.

5. Indicateur de position mécanique selon la revendication 4,
dans lequel, dans un état monté, la deuxième limite (112) par rapport à une orientation de montage est la limite faisant face audit actionneur.

6. Indicateur de position mécanique selon la revendication 4 ou 5,
dans lequel ledit masque (140) conserve sa position grâce à une friction ou à un mécanisme de fixation (141) tel qu'un mécanisme à vis ou un mécanisme à loquet ou de type similaire.

7. Indicateur de position mécanique selon l'une des revendications 4 à 6 précédentes,
dans lequel une séparation spatiale (114) entre la première limite et la deuxième limite est d'au moins 10 centimètres, et de préférence d'au moins 20 centimètres et notamment d'au moins 30 centimètres,
et/ou
dans lequel ladite séparation spatiale est au plus de 200 centimètres, et de préférence au plus de 150 centimètres et notamment au plus de 100 centimètres.

8. Indicateur de position mécanique selon l'une des revendications précédentes,
dans lequel un diamètre (115) dudit élément d'indication (110) en coupe est d'au moins 2 centimètres et de préférence d'au moins 5 centimètres et notamment d'au moins 10 centimètres
et/ou
dans lequel ledit diamètre est au plus de 70 centimètres, et de préférence au plus de 50 centimètres et notamment au plus de 30 centimètres.

9. Indicateur de position mécanique selon l'une des revendications 4 à 8 précédentes,
dans lequel un rapport entre une séparation de ladite première limite (111) et de ladite deuxième limite (112) et ledit diamètre (115) dudit élément d'indication (110) est
d'au moins 2, et de préférence d'au moins 3 et notamment d'au moins 5
et/ou
est au plus de 20, et de préférence au plus de 15 et notamment au plus de 10.

10. Indicateur de position mécanique selon l'une des revendications précédentes,
dans lequel ledit élément d'indication (110) est logé à l'intérieur d'une partie de boîtier optiquement transparente (151) d'un boîtier (150) dudit indicateur de position mécanique.

11. Indicateur de position mécanique selon la revendication 4 ou 6 ou 10,
dans lequel ledit masque (140) est agencé à l'extérieur dudit boîtier (150).

12. Indicateur de position mécanique selon l'une des revendications précédentes,
dans lequel ledit élément d'indication (110) a une première couleur,
et dans lequel un élément de fond (116) a une deuxième couleur, dans lequel ladite première couleur et ladite deuxième couleur sur une roue chromatique, respectivement un cercle chromatique, ont une distance angulaire d'au moins 60 degrés.

13. Agencement de technologie d'automatisation comprenant :
un train d'engrenages comprenant un arbre de sortie creux ; un indicateur de position mécanique (100) selon l'une des revendications précédentes pour représenter un état d'actionnement dudit train d'engrenages, qui est relié mécaniquement audit train d'engrenages,
dans lequel un arbre de liaison creux (161) est positionné à l'intérieur dudit arbre de sortie ou d'un arbre d'engrenage, dans lequel ledit au moins un dispositif de friction (162) fixe la position de l'arbre de liaison par rapport audit arbre de sortie ou audit arbre d'engrenage.

14. Actionneur (1) de technologie d'automatisation comprenant :
une sortie (20) avec un arbre de sortie pour actionner un dispositif mécanique tel qu'une vanne ;
un train d'engrenages (10) d'actionneur ;
un entraînement (30), dans lequel l'entraînement est configuré pour entraîner ladite sortie, et dans lequel le train d'engrenages d'actionneur est configuré pour transmettre une force ou un couple de l'entraînement vers l'arbre de sortie ;
un agencement (40) de boîtier d'actionneur, dans lequel ledit arbre de sortie, ledit entraînement et ledit train d'engrenages d'actionneur sont agencés à l'intérieur dudit agencement de boîtier d'actionneur,
**caractérisé en ce que**
l'actionneur comprend un indicateur de position mécanique (100) selon l'une des revendications 1 à 12, dans lequel ledit train d'engrenages d'actionneur ou ladite sortie est configuré pour entraîner ledit train d'engrenages d'indicateur,
dans lequel ledit train d'engrenages d'indicateur est relié audit train d'engrenages d'actionneur ou à la sortie via l'entrée (121) dudit train d'engrenages d'indicateur.

15. Actionneur selon la revendication 14,
dans lequel ledit entraînement est un entraînement électrique, hydraulique ou pneumatique,
dans lequel l'actionneur comprend un circuit électronique (50) pour actionner ledit entraînement.
